Europäisches Patentamt

European Patent Office

Office européen des brevets

(19)

(11) **EP 1 109 146 A2**

(12) **EUROPEAN PATENT APPLICATION**

(43) Date of publication:
**20.06.2001 Bulletin 2001/25**

(51) Int Cl.$^7$: **G09G 1/16**

(21) Application number: **00311231.5**

(22) Date of filing: **15.12.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Yamazaki, Nobuo**<br>**Shinagawa-Ku, Tokyo (JP)** |
| (30) Priority: **17.12.1999 JP 35838299** | (74) Representative: **Ayers, Martyn Lewis Stanley**<br>**J.A. KEMP & CO.**<br>**14 South Square**<br>**Gray's Inn**<br>**London WC1R 5JJ (GB)** |
| (71) Applicant: **SONY CORPORATION**<br>**Tokyo (JP)** | |

(54) **Sync frequency conversion circuit**

(57) A sync frequency conversion circuit comprises first circuits for forming a write control signal changeable in synchronism with horizontal and vertical sync frequencies of an input video signal; a memory where the input video signal is written by the write control signal; a discriminator for discriminating the horizontal and vertical sync frequencies of the input video signal; a phase locked loop controlled by the discrimination result obtained from the discriminator, and serving to output a clock signal of a frequency changeable in accordance with such discrimination result; and second circuits for forming a read control signal from both of the discrimination output of the discriminator and the clock signal. The read control signal is supplied to the memory so that the video signal written in the memory is read out therefrom in such a manner that the horizontal sync frequency, the horizontal blanking interval and the vertical blanking interval are maintained substantially at fixed values regardless of the horizontal sync frequency of the input video signal.

F I G . 1

**Description**

BACKGROUND OF THE INVENTION

The present invention relates to a circuit for converting the sync frequencies of a video signal.

In television receivers, personal computers and so forth, a cathode ray tube (CRT) is used in many cases as display means or a display device.

With regard to television broadcasting, horizontal and vertical sync frequencies are different depending on the NTSC system, CCIR system and high vision system.

In personal computers, although depending on the OS thereof, it is possible for a user to change the display resolution (number of pixels per picture). Generally, the resolution is kept at 640 dots x 480 lines (dots) until startup of the OS. However, the resolution is switched, after startup of the OS, to the value preset by the user, e.g., to 1024 dots x 768 lines. At this time, the horizontal and vertical sync frequencies are changed in accordance with the resolution.

In a variety of display units each employing a CRT, a CRT monitor (CRT display) termed a multi-scan monitor or the like is so contrived as to be able to conform with a plurality of horizontal and vertical sync frequencies.

In this case, there are known the following two methods adopted in a CRT monitor to conform with a plurality of horizontal and vertical sync frequencies.

(1) To maintain the horizontal and vertical deflection frequencies (scanning frequencies) in the CRT fixedly to predetermined frequencies. According to this method, input video signals are processed through interpolation and reduction, whereby the horizontal and vertical sync frequencies of the input video signals are converted into the horizontal and vertical deflection frequencies in the CRT.

(2) To render the horizontal and vertical deflection frequencies variable in the CRT. According to this method, such horizontal and vertical deflection frequencies are so changed as to be coincident with the horizontal and vertical sync frequencies of the input video signals.

In this specification, it is supposed that, for clearly defining the "sync frequency", the term "deflection frequency" is used to signify the frequency at which the horizontal or vertical deflection is performed in a CRT, scanning frequency, i.e., the horizontal or vertical sync frequency of the video signal supplied to the CRT.

In the method (1) where interpolation and reduction of the input video signals are executed, a point or a line to be displayed essentially by a single dot for example is displayed actually by two dots and the image thereof is blurred. And such undesired phenomena are caused nonuniformly, as occurring at every three dots for example. As a result, when some text characters or graphics are displayed, the display quality thereof is extremely deteriorated.

In the process of interpolation, an AND-OR calculator or the like is used as hardware (a digital filter and so forth are also used in this process, and such a filter comprises an AND-OR calculator or the like as well). For this reason, there arises a problem that the AND-OR calculators occupy a great proportion of an LSI in the hardware. Further, since the signals to be handled have a wide and high frequency range, the operating frequency of the interpolation calculator becomes very high to consequently bring about difficulty in attaining proper measures.

Meanwhile in the other method (2), the input video signals are not processed, so that the problems existing in the method (1) are not raised.

However, in the method (2) where the horizontal deflection frequency range is wide, it is fundamentally customary that, for achieving stable horizontal deflection and producing a high voltage for the CRT, there is employed a separate configuration where a horizontal deflection circuit and a high voltage generating circuit are formed separately.

In this case, the horizontal deflection circuit needs to be synchronized with the wide range frequency, and therefore some difficulties are existent in designing a superior circuit which has satisfactory synchronization performance including anti-jitter performance. Further, due to the characteristic of the horizontal deflection circuit, it may be broken down by any abrupt frequency change of horizontal driving pulses, hence necessitating exact execution of the procedure for protection.

Further, since the horizontal size of the displayed picture is varied with a change of the horizontal deflection frequency, it is necessary to control the power supply of the horizontal deflection circuit in accordance with the horizontal deflection frequency. In addition, a horizontal S-shape correcting capacitor needs to be switched in compliance with the horizontal deflection frequency, and therefore a high withstand voltage FET must be employed as a switch for such a switching action.

Moreover, tracking control also needs to be executed for the frequency characteristic of the horizontal deflection circuit. Consequently, in comparison with an ordinary deflection circuit of a single horizontal scanning frequency, some complication is unavoidable both circuit-wise and system-wise. Further, the response in controlling the main deflection and the high voltage is changed depending on the horizontal scanning frequency, so that considerable difficulties exist in setting relevant design parameters and, in some cases, there arises necessity of switching the parameters in compliance with the horizontal scanning frequency.

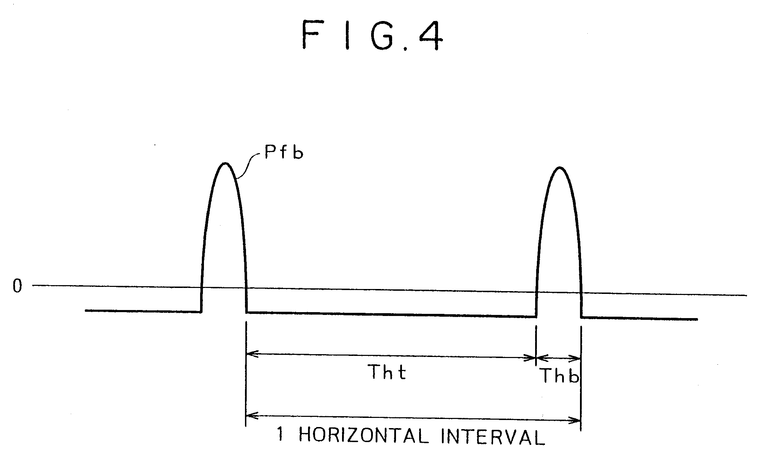

Besides the above, as shown in Fig. 4 for example, a high voltage pulse Pfb termed a flyback pulse is generated, in the collector of a horizontal output transistor, during a horizontal blanking interval Thb. And the peak voltage of this flyback pulse Pfb is proportional to Tht/Thb which is the ratio of the horizontal scanning interval Tht to the horizontal blanking interval Thb.

At this time, the length of the horizontal blanking interval Thb is substantially equal to the duration of the flyback pulse Pfb, and this pulse duration is determined by the time constant of a horizontal deflection coil and a resonance capacitor thereof. When there are a plurality of input video signals, the length of the horizontal blanking interval Thb needs to be preset to the shortest one of the horizontal blanking intervals of such input video signals.

Therefore, in case the horizontal deflection frequency is switched, the horizontal interval (Tht + Thb) is changed while the length of the horizontal blanking interval Thb remains fixed, whereby the ratio Tht/Thb is changed to consequently change the peak value of the flyback pulse Pfb. For this reason, considering a case where the peak value of the flyback pulse Pfb becomes high, the horizontal output transistor is required to have a high withstand voltage.

In the method (2), there arises a problem also in a vertical deflection circuit similarly to the one caused in the horizontal deflection circuit, but the frequencies of the signals to be handled in the vertical deflection circuit are far lower than those in the horizontal deflection circuit, so that the burden is considerably smaller and the measure is relatively easier in comparison with the horizontal deflection circuit. More specifically, the vertical deflection circuit can be formed with facility in a manner to be capable of complying with any change of the vertical deflection frequency, and the required measure is merely to cope with the flyback pulse generated in the collector of a vertical output transistor.

Due to the reasons mentioned, generally the method (2) is adopted in the multi-scan monitor. However, the problems described above still remain unsolved.

## SUMMARY OF THE INVENTION

The present invention has been accomplished in view of the above-mentioned points to solve the problems observed in the methods (1) and (2).

It is therefore an object of the present invention to provide improvements in which the sync frequencies of an input video signal are converted into frequencies for display, wherein the horizontal deflection frequency, horizontal blanking interval and vertical blanking interval of the video signal after such frequency conversion are maintained substantially at fixed values regardless of the sync frequencies of the input video signal.

According to one aspect of the present invention, there is provided a sync frequency conversion circuit which comprises first circuits for forming a write control signal changeable in synchronism with horizontal and vertical sync signals of an input video signal; a memory where the input video signal is written by the write control signal; a discrimination circuit for discriminating the horizontal and vertical sync frequencies of the input video signal; a PLL (phase locked loop) controlled by the discrimination result obtained from the discrimination circuit, and serving to output a clock signal of a frequency changeable in accordance with the discrimination result; and second circuits for forming a read control signal from both of the discrimination output of the discrimination circuit and the clock signal; wherein the read control signal is supplied to the memory so that the video signal written in the memory is read out therefrom in such a manner that the horizontal sync frequency, the horizontal blanking interval and the vertical blanking interval are maintained substantially at fixed values regardless of the horizontal sync frequency of the input video signal.

Consequently, the video signal read out from the memory is such that the horizontal sync frequency, horizontal blanking interval and vertical blanking interval thereof are substantially fixed regardless of the sync frequency of the input video signal.

The above and other features and advantages of the present invention will become apparent from the following description which will be given with reference to the illustrative accompanying drawings.

## BRIEF DESCRIPTION OF THE DRAWINGS

Fig. 1 is a system block diagram showing an embodiment of the present invention;
Fig. 2 is another system block diagram showing the embodiment of the present invention;
Fig. 3 is a timing chart of signals for explaining the invention; and
Fig. 4 is waveform chart for explaining the invention.

DETAILED DESCRIPTION OF PREFERRED EMBODIMENTS

Hereinafter some preferred embodiments of the present invention will be described in detail with reference to the accompanying drawings.

Suppose now that an input video signal is written in a frame memory in synchronism with its horizontal and vertical sync frequencies, and then the video signal thus written is read out from the frame memory in synchronism with the horizontal and vertical deflection frequencies of a CRT.

It is also supposed here that, when the input video signal is written in the frame memory, writing is executed per dot displayed by such video signal. And the video signal is read out dot by dot from the frame memory individually without any excess or deficiency per dot.

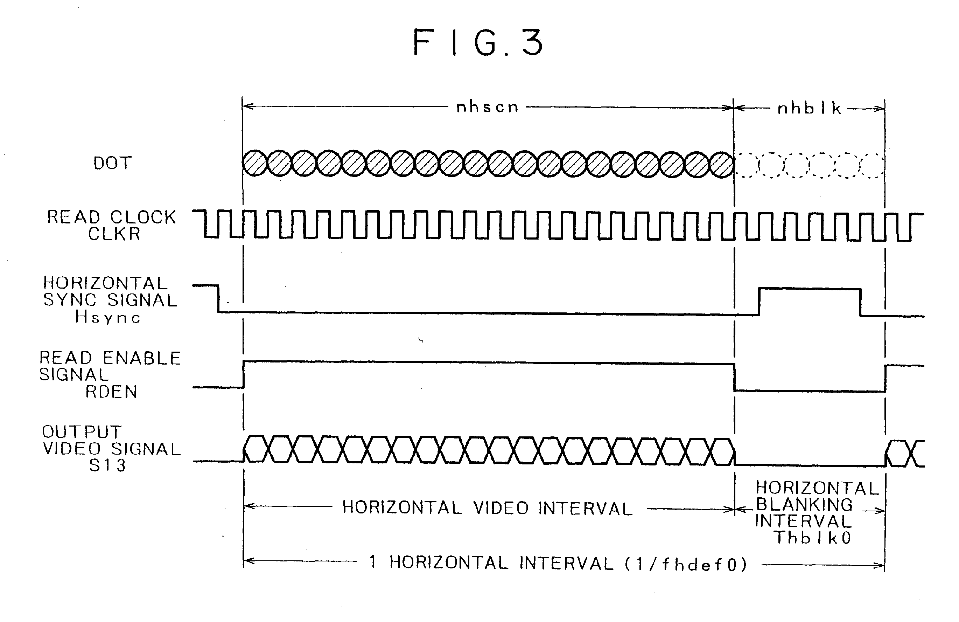

First, horizontal deflection in the CRT is performed as mentioned below. When a video signal is read out, as shown also in Fig.3, there is the following relation in any horizontal line between individual dots displayed on the CRT and each cycle of a read clock CLKR, with regard to a horizontal video interval (horizontal scanning interval).

$$nhscn \cdot Tclkr = Thdef - Thblk \qquad (1)$$

where

nhscn:  number of dots in horizontal video interval
Tclkr:  cycle of read clock CLKR
Thdef:  horizontal deflection interval
         (1 horizontal interval) in CRT
Thblk:  horizontal blanking interval in CRT

At this time,

$$Tclkr = 1/fclkr \qquad (2)$$

where

fclkr:  frequency of read clock CLKR

Substituting Eq. (2) for Eq. (1),

$$nhscn/fclkr = Thdef - Thblk \qquad (3)$$

Modifying the above,

$$fclkr = nhscn/(Thdef - Thblk) \qquad (4)$$

When a read clock CLKR is formed by the PLL,

$$fclkr = N \cdot fref \qquad (5)$$

where

N:    frequency division ratio of frequency division circuit in PLL
fref:  frequency of reference signal in PLL

Therefore, from Eqs. (4) and (5),

$$N = fclkr/fref$$

$$= nhscn/((Thdef - Thblk) \cdot fref) \qquad \ldots (6)$$

Since the frequency division ratio N is actually an integer, Eq. (6) may be rewritten as

$$N = int(nhscn/((Thdef - Thblk) \cdot fref) + 0.5) \qquad (7)$$

In the above, int(x) is a function employed to obtain an integer by omitting the fraction under the decimal point of the value x, and consequently int(x + 0.5) becomes an integer rounded by omission of the fraction under the decimal point of the value x. Therefore, the frequency division ratio N calculated from Eq. (7) becomes an integer obtained by rounding off the fraction under the decimal point of the frequency division ratio N calculated from Eq. (6). If the error is negligible and raises no problem, the ratio N may be rounded to an integer by dropping the fraction.
Using the frequency division ratio N calculated from Eq. (7) (or Eq. (6)), the frequency fclk0 of the read clock CLKR obtained actually from Eq. (5) is expressed as

$$fclk0 = int(nhscn/((Thdef - Thblk) \cdot fref) + 0.5) \times fref \qquad (8)$$

Converting the horizontal blanking interval Thblk into the number of dots nhblk,

$$nhblk = int(Thblk \cdot fclkr + 0.5)$$

$$= int(Thblk \cdot N \cdot fref + 0.5) \qquad (9)$$

Therefore, in displaying the video signal read out from the frame memory, the actual horizontal deflection frequency fhdef0 and horizontal blanking interval Thblk0 are expressed as

$$fhdef0 = fclk0/(nhscn + nhblk) \qquad (10)$$

$$Thblk0 = nhblk/fclk0 \qquad (11)$$

More specifically, if the frequency division ratio N at the time of reading out the video signal from the frame memory is the value given by Eq. (7), the frequency fclk0 of the read clock CLKR becomes the value given by Eq. (8), so that the dots of the input video signal can be displayed individually without the necessity of processing the video signal through interpolation.
Meanwhile, vertical deflection in the CRT is performed as follows.

Horizontal deflection frequency = Vertical deflection frequency x Number of lines in 1 vertical interval

Or

Horizontal sync frequency = Vertical sync frequency x Number of lines in 1 vertical interval　(12)

In this case where the horizontal deflection frequency is kept at a fixed value fhdef0, the read vertical cycle in reading out the video signal from the frame memory is changed in accordance with the number of lines of the video signal to be read out. However, since the vertical deflection frequency is far lower than the horizontal deflection frequency as mentioned, the burden relative to the vertical deflection circuit is considerably smaller.
Converting the vertical blanking interval Tvblk into the number of dots nvblk,

$$nvblk = int(Tvblk \cdot fhdef + 0.5) \tag{13}$$

Therefore, the actual vertical deflection frequency fvdef0 and vertical blanking interval Tvblk0 of the video signal read out from the frame memory are expressed as

$$fvdef0 = fhdef0/(nvscn + nvblk) \tag{14}$$

$$Tvblk0 = nvblk/fhdef0 \tag{15}$$

where

nvscn:    Value converted into number of lines in vertical video interval

When a picture is displayed on the CRT by the method described above, the video signal is merely written in and read out from the frame memory, and any process such as interpolation or reduction is not performed at all, so that the display quality is not deteriorated substantially.

Some errors are caused by rounding the frequency division ratio N, the number of dots nhblk converted from the horizontal blanking interval Thblk, and the number of dots nvblk converted from the vertical blanking interval Tvblk so as to obtain integers thereof. However, the horizontal deflection frequency fhdef, the horizontal blanking interval Thblk and the vertical blanking interval Tvblk in the CRT can be set to fixed values according to Eqs. (8) to (15).

Consequently, it becomes possible to eliminate the necessity of changing the horizontal deflection frequency in the CRT regardless of any change of the resolution, hence facilitating the structure of the horizontal deflection circuit and achieving proper horizontal deflection with correction of distortion and so forth. Further, the requirements for the withstand voltages of both horizontal and vertical output transistors can be alleviated by setting the vertical blanking interval Thblk and the vertical blanking interval Tvblk respectively to the allowable greatest lengths.

Since the frequency division ratio N is an integer as described, all the horizontal deflection frequency fhdef, horizontal blanking interval Thblk and vertical blanking interval Tvblk are changed somewhat in accordance with a change of the resolution. Therefore, the reference signal frequency fref in the PLL may be so set that the resultant changes are kept within certain frequency ranges where both of the horizontal deflection circuit and the vertical deflection circuit are properly operable.

As obvious from Eq. (12), the vertical deflection frequency fvdef0 becomes lower with an increase of the number of lines nvscn, and flicker on the CRT is rendered conspicuous. For this reason, the horizontal deflection frequency fhdef0 is so set that the flicker on the CRT is inconspicuous even when the input video signal has the maximum number of lines nvscn.

On the basis of the conception mentioned above, the present invention contrives a sync frequency conversion circuit which is capable of complying with plural combinations of sync frequencies. Now a preferred embodiment of the present invention will be described below in detail.

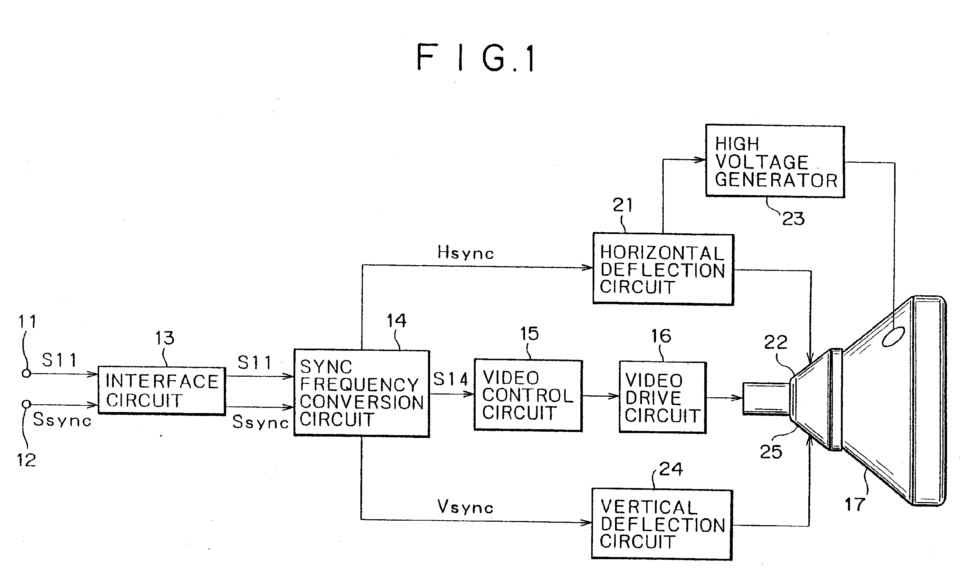

In Fig. 1, an input video signal S11 is supplied from an input terminal 11 via an input interface circuit 13 to a sync frequency conversion circuit 14. Meanwhile, horizontal and vertical sync signals Ssync corresponding to the input video signal S11 are supplied from an input terminal 12 via the interface circuit 13 to the sync frequency conversion circuit 14.

In this case, the video signal S11 is a trichromatic one composed of red, green and blue color signals. As will be described in detail later, the conversion circuit 14 has a frame memory and, in conformity with the conception mentioned above, converts the sync frequencies of the supplied video signal S11 and then outputs a video signal S14.

Subsequently the output video signal S14 is processed through gamma correction and so forth in a video control circuit 15, and then is supplied via a video drive circuit 16 to a color CRT 17.

A horizontal sync signal Hsync, which is synchronized with the output video signal S14 as shown in Fig. 3 for example, is taken out from the conversion circuit 14, and the horizontal sync signal Hsync thus obtained is supplied to a horizontal deflection circuit 21, where a horizontal deflection current is formed. Thereafter the horizontal deflection current is supplied to a horizontal deflection coil 22 to execute horizontal deflection in the CRT 17. The horizontal deflection frequency at this time has a value fhdef0.

Further, horizontal pulses are obtained from the horizontal deflection circuit 21 and then are supplied to a high voltage generator 23, where a high voltage is formed. And this high voltage is supplied as an anode voltage and so forth to the CRT 17.

Meanwhile, a vertical sync signal Vsync synchronized with the output video signal S14 is taken out from the conversion circuit 14. This vertical sync signal Vsync is supplied to a vertical deflection circuit 24, where a vertical deflection current is formed. Thereafter the vertical deflection current is supplied to a vertical deflection coil 25 to execute vertical deflection in the CRT 17. The vertical deflection frequency at this time has a value fvdef0.

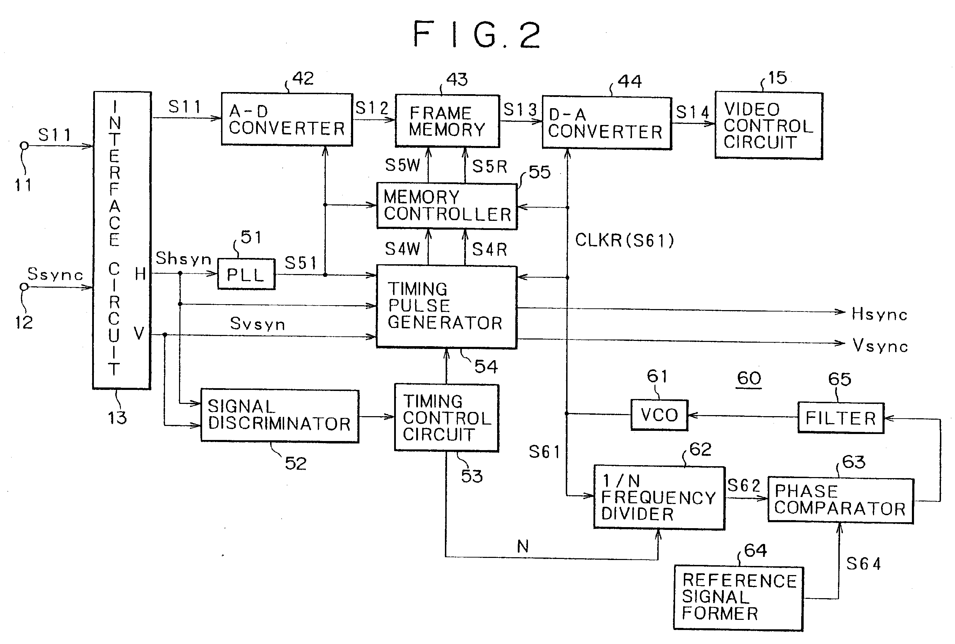

In this case, the sync frequency conversion circuit 14 is so constituted as shown in Fig. 2 for example. The input video signal Sll from the interface circuit 13 is supplied to an A-D converter 42, where analog-to-digital conversion is executed to produce a digital video signal S12. And this signal S12 is supplied to a frame memory 43.

The horizontal sync signal Shsyn is obtained, out of the entire sync signals Ssync, from the interface circuit 13 and then is supplied to a PLL 51, where a pulse signal S51 of a frequency corresponding to the dot cycle of the input video signal S11 is formed. Thereafter the pulse signal S51 is supplied to the A-D converter 42 as a clock for analog-to-digital conversion. The input video signal S11 is converted into a digital signal as described above dot by dot individually to be displayed by the signal S11.

Further the horizontal and vertical sync signals Ssync are supplied from the interface circuit 13 to a signal discriminator 52, which then discriminates the horizontal and vertical sync frequencies of the input video signal S11 and the temporal positions of the horizontal and vertical video intervals. And the discrimination output obtained therefrom is supplied to a timing control circuit 53.

The timing control circuit 53 comprises a microcomputer, DSP or hard logic. This control circuit 53 detects, from the information represented by the discrimination output of the signal discriminator 52, the number of dots per horizontal interval of the input video signal S11 and the output video signal S14, the number of lines per vertical interval, and the temporal positions of the horizontal and vertical video intervals (scanning intervals), through computation or reference to a lookup table prepared in a nonvolatile memory or the like, thereby generating data which are required for converting the sync frequencies of the video signal.

The output of the control circuit 53 is supplied to a timing pulse generator 54. Meanwhile, the pulse signal S51 from the PLL 51 is supplied to the timing pulse generator 54, and also the horizontal and vertical sync signals Ssync from the interface circuit 13 are supplied to the timing pulse generator 54.

Thus, a timing signal S4W is formed in the timing pulse generator 54. This timing signal S4W indicates the timing to write the video signal S12 in the frame memory 43, and includes signals representing the temporal positions of the horizontal and vertical video intervals.

The timing signal S4W is supplied to a memory controller 55, and simultaneously the pulse signal S51 from the PLL 51 is supplied also to the memory controller 55. Subsequently a control signal S5W for writing the input video signal S12 into the frame memory 43 is formed in the memory controller 55, and then the signal S5W is supplied to the frame memory 43.

This control signal S5W includes a write clock, a write address signal and a write enable signal for writing the video signal S12 into the frame memory 43, and such signals are changed in synchronism with the effective dots and lines of the input video signal S12.

Therefore, out of the entire input video signal S12, the signal of a section corresponding to the display picture is written dot by dot sequentially into the frame memory 43 without any excess or deficiency.

The input video signal S12 thus written in the frame memory 43 is read out therefrom synchronously with the horizontal and vertical deflection in the CRT 17. More specifically, an oscillation signal S61 of a predetermined frequency is generated from a VCO 61, and this oscillation signal S61 is supplied to a variable frequency divider 62. The VCO 61 and the variable frequency divider 62 constitute a PLL 60 in combination with other circuits 63 to 65.

The frequency division ratio N calculated according to Eq. (7) is obtained from the timing control circuit 53, and then the frequency division ratio N is set in the variable frequency divider 62. Subsequently, a signal S62 of a frequency divided into 1/N of the oscillation signal S61 is outputted from the variable frequency divider 62, and the frequency-divided signal S62 is supplied to a phase comparator 63. Further a reference signal S64 of a steady reference frequency is formed in a reference signal former 64 and then is supplied to the phase comparator 63.

In the comparator 63, the phase of the frequency-divided signal S62 is compared with that of the reference signal S64, and the comparison output is supplied to a loop filter 65, which then produces a DC voltage whose level changes in accordance with the phase difference between the frequency-divided signal S62 and the reference signal S64. This DC voltage is supplied as a control voltage to the VCO 61.

Consequently, in a steady state, the frequencies of the two signals S62 and S64 are rendered equal to each other, so that the condition of Eq. (5) is satisfied. As a result, the frequency of the oscillation signal S61 outputted from the VCO 61 is controlled to the frequency fclk0 given by Eq. (8).

The signal S61 is supplied as a read clock CLKR to the timing pulse generator 54, where a horizontal sync signal Hsync and a vertical sync signal Vsync are formed. Such sync signals Hsync and Vsync are supplied respectively to the deflection circuits 21 and 24 as described, so that horizontal and vertical deflections are executed at frequencies fhdef0 and fvdef0 in the CRT 17.

In the timing pulse generator 54, a timing signal S4R is formed in synchronism with the signal S61 (read clock CLKR) supplied thereto. This timing signal S4R indicates the timing to read out the video signal S13 from the frame memory 43, and includes signals representing the temporal positions of horizontal and vertical video intervals.

This timing signal S4R is supplied to a memory controller 55, where a control signal S5R for reading the output video signal S13 from the frame memory 43 is formed. The control signal S5R thus formed is then supplied to the frame memory 43. This control signal S5R includes, as shown in Fig. 3 for example, a read clock CLKR, a read address signal and a read enable signal RDEN for reading the video signal S13 from the frame memory 43.

Consequently, there is obtained, from the frame memory 43, the output video signal S13 where, as shown in Fig. 3 for example, the horizontal frequency is kept at a fixed value fhdef0 regardless of the horizontal and vertical sync frequencies of the input video signal S12, while the vertical frequency thereof changes in accordance with the number of lines of the input video signal S11.

The video signal S13 thus obtained is supplied to the D-A converter 44, and the pulse signal S61 outputted from the VCO 61 is supplied also to the D-A converter 44 as a clock for digital-to-analog conversion. Thereafter in the D-A converter 44, the video signal S13 is converted into an analog trichromatic video signal S14 composed of red, green and blue video signal components through digital-to-analog conversion, and the video signal S14 is supplied via a video control circuit 15 and a video drive circuit 16 to the color CRT 17.

Thus, according to the display unit and the sync frequency conversion circuit in Figs. 1 and 2, the horizontal deflection frequency can be kept at its fixed value fhdef0 to plural combinations of sync frequencies. Since the horizontal deflection frequency in the CRT 17 can be maintained constant in this manner to plural combinations of sync frequencies, the horizontal deflection circuit 22 is required merely to synchronize with the fixed frequency fhdef0, whereby its synchronization performance inclusive of anti-jitter characteristic is enhanced.

Further, even when the horizontal sync frequency of the input video signal S11 is changed during use, there occurs no sudden change in the frequency of the horizontal driving pulses, hence eliminating the necessity of a countermeasure for prevention of breakdown against such frequency change.

Moreover, as the horizontal deflection frequency fhdef0 remains unchanged despite any change in the horizontal sync frequency of the input video signal S11, there exists no necessity of controlling the power supply for the horizontal deflection circuit 22. In addition, the horizontal S-shape correcting capacitor need not be switched in compliance with the horizontal deflection frequency fhdef0, and a high withstand-voltage FET for such switching is not needed either. Since all the horizontal deflection frequency fhdef, horizontal blanking interval Thblk and vertical blanking interval Tvblk are maintained to be substantially fixed, these values may be set to the allowable maximums to thereby lower the required withstand voltages of the horizontal and vertical output transistors.

Further, tracking control for the frequency characteristic of the horizontal deflection circuit 22 is not needed to eventually simplify the structure both circuit-wise and system-wise. Normally, the response in controlling the main deflection and the high voltage is changed with the horizontal deflection frequency. However, since the horizontal deflection frequency fhdef0 is kept fixed, the design parameters are settable with ease, and the parameters need not be switched either.

None of interpolation or reduction is performed with regard to the input video signal S11, so that the display quality is not deteriorated in displaying any text characters or graphics. Besides the above, any AND-OR calculator or the like is not required for the process of interpolation, hence diminishing the integration density of the LSI. Further, the AND-OR calculator need not be operated at an extremely high operating frequency to consequently eliminate the necessity of a measure for such operating frequency.

The description given above is concerned with an exemplary case where the input video signal S11 is a general analog one. However, in the case of TDMS or LVDS format, the input video signal may be first decoded into a general digital video signal in the interface circuit 13 or the like prior to being supplied to the frame memory 43.

As mentioned, the frequency division ratio N calculated according to Eq. (7) has the integral value obtained by rounding the frequency division ratio N calculated according to Eq. (6). Therefore, the horizontal deflection frequency fhdef0 is changed correspondingly to the fraction in rounding the ratio to an integer. In this case, the change of the horizontal deflection frequency fhdef0 can be minimized by changing the frequency fref of the reference signal S64.

In constituting the timing control circuit 53 by the use of a DSP, the existing DSP employed to form a distortion correcting signal for the CRT 17 may be used in common.

If the horizontal deflection frequency fhdef0 is so set that the flicker on the CRT is rendered inconspicuous when the number of lines nvscn of the input video signal is maximum, then the horizontal deflection frequency fhdef0 may occasionally become excessively high. In such a case, the circuit is so designed as to be capable of selectively switching the horizontal deflection frequency fhdef0 to any of plural values, wherein the horizontal deflection frequency fhdef0 can be switched to a selected value in accordance with the number of lines nvscn of the input video signal.

[List of abbreviations used in this specification]

A-D : Analog to Digital
CCIR : Comite Consultantif International Radiophonique
(International Radio Consultative Committee)
CRT : Cathode Ray Tube
D-A : Digital to Analog
DSP : Digital Signal Processor
FET : Field Effect Transistor
LSI : Large Scale Integration
LVDS : Low Voltage Differential Signal
NTSC : National Television System Committee
OS : Operating System
PLL : Phase Locked Loop
TDMS : Transition Minimized Differential Signal
VCO : Voltage Controlled Oscillator

According to the present invention, as mentioned above, the horizontal deflection frequency can be kept at a fixed value to plural combinations of sync frequencies. Therefore, the horizontal deflection circuit is required to synchronize merely with such a fixed frequency, and the synchronization performance inclusive of anti-jitter characteristic is enhanced. Further, even when the horizontal sync frequency of the input video signal is changed during use, there occurs none of sudden change in the frequency of the horizontal driving pulses, hence eliminating the necessity of a countermeasure for prevention of breakdown against such frequency change.

Moreover, as the horizontal deflection frequency remains unchanged despite any change in the horizontal sync frequency of the input video signal, there exists no necessity of controlling the power supply for the horizontal deflection circuit. In addition, the horizontal S-shape correcting capacitor need not be switched in compliance with the horizontal deflection frequency, and a high withstand-voltage FET for such switching is not needed either. And it becomes possible to use horizontal and vertical output transistors of lower withstand voltages.

Further, tracking control for the frequency characteristic of the horizontal deflection circuit is not needed to eventually simplify the structure both circuit-wise and system-wise. Normally, the response in controlling the main deflection and the high voltage is changed with the horizontal deflection frequency. However, since the horizontal deflection frequency is kept fixed, the design parameters are settable with ease, and the parameters need not be switched either.

None of interpolation or reduction is performed with regard to the input video signal, so that the display quality is not deteriorated in displaying any text characters or graphics. Besides the above, any AND-OR calculator or the like is not required for the process of interpolation, hence diminishing the integration density of the LSI. Further, the AND-OR calculator need not be operated at an extremely high operating frequency to consequently eliminate the necessity of a measure for such operating frequency.

Although the present invention has been described hereinabove with reference to some preferred embodiments thereof, it is to be understood that the invention is not limited to such embodiments alone, and a variety of other changes and modifications will be apparent to those skilled in the art without departing from the spirit of the invention.

The scope of the invention, therefore, is to be determined solely by the appended claims.

**Claims**

**1.** A sync frequency conversion circuit comprising:

first circuits for forming a write control signal changeable in synchronism with horizontal and vertical sync signals of an input video signal;
a memory where the input video signal is written by the write control signal;
a discrimination circuit for discriminating the horizontal and vertical sync frequencies of the input video signal;
a phase locked loop controlled by the discrimination result obtained from said discrimination circuit, and serving to output a clock signal of a frequency changeable in accordance with said discrimination result; and
second circuits for forming a read control signal from both of the discrimination output of said discrimination circuit and the clock signal;

wherein the read control signal is supplied to said memory so that the video signal written in said memory is read out therefrom in such a manner that the horizontal sync frequency, the horizontal blanking interval and the vertical blanking interval are maintained substantially at fixed values regardless of the horizontal sync frequency of said input video signal.

2.  A sync frequency conversion circuit comprising:

first circuits for forming a write control signal changeable in synchronism with horizontal and vertical sync signals of an input video signal;
a memory where the input video signal is written by the write control signal;
a discrimination circuit for discriminating the horizontal and vertical sync frequencies of the input video signal;
a phase locked loop having a variable frequency divider whose frequency division ratio is controlled by the discrimination result obtained from said discrimination circuit, and serving to output a clock signal of a frequency changeable in accordance with said discrimination result; and
second circuits for forming a predetermined read control signal from the clock signal;

wherein the read control signal is supplied to said memory so that the video signal written in said memory is read out therefrom, said read control signal acting to read out the written video signal from said memory in such a manner that the horizontal sync frequency, the horizontal blanking interval and the vertical blanking interval are maintained substantially at fixed values regardless of the horizontal sync frequency of said input video signal, and also that the number of lines per vertical cycle of the video signal read out from said memory is equalized to the number of lines per vertical cycle of the input video signal.

3.  The sync frequency conversion circuit according to claim 1 or 2, wherein the frequency of the read video signal is so changed that the number of dots per line of the video signal read out from said memory becomes equal to the number of dots per line of the input video signal.

F I G . 1

# F I G . 2

EP 1 109 146 A2

# FIG.3

# FIG.4

Pfb

0

Tht

Thb

1 HORIZONTAL INTERVAL

EP 1 109 146 A2